# EUROPEAN PATENT APPLICATION

(11) **EP 4 851 770 A1**
(43) Date of publication of application: **09.12.2026**
(21) Application number: 26183181.2
(22) Date of filing: 04.06.2026
(51) Int. Cl.: G06F 3/0482

(54) **TECHNIQUES FOR MANAGING A REPOSITORY**

(30) Priority: 06.06.2025 US 202563819389 P; 13.04.2026 US 202619645785
(71) Applicant: Apple Inc., Cupertino, CA 95014 (US)
(72) Inventor: LO, Chun Wing Chloe, Cupertino, 95014 (US); FONG, Hok Nang Sidney, Cupertino, 95014 (US); FONG, Oscar Hok Kar, Cupertino, 95014 (US); Tang Lung, CHEUNG, Cupertino, 95014 (US); WONG, Yat Cheung, Cupertino, 95014 (US)
(74) Representative: Bateman, Samuel Alec

(57) **Abstract**

The present disclosure generally relates to accessing content.

## Description

### CROSS-REFERENCE TO RELATED APPLICATIONS

This application claims priority to U.S. Provisional Patent Application Serial No. 63/819,389, entitled "TECHNIQUES FOR MANAGING A REPOSITORY," filed June 6, 2025. The content of this application is hereby incorporated by reference in its entirety.

### FIELD

The present disclosure relates generally to computer user interfaces, and more specifically to techniques for accessing content.

### BACKGROUND

Electronic devices often includes or have access to repositories, such as sets of text messages and/or emails. Accessing such repositories can be time consuming, particular as the size of the repositories becomes larger.

### SUMMARY

Some techniques for accessing content using electronic devices are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient processes and interfaces for accessing content from repositories. Such processes and interfaces optionally complement or replace other processes for content management. Such processes and interfaces reduce the cognitive burden on a user and produce a more efficient human-machine interface. For battery-operated computing devices, such processes and interfaces conserve power and increase the time between battery charges.

In some embodiments, a method that is performed at a computer system that is in communication with one or more input devices and one or more display generation components is described. In some embodiments, the method comprises: in response to detecting, via the one or more input devices, a first input corresponding to a set of multiple, separate documents, displaying, via the one or more display generation components, a user interface including a set of one or more items, extracted from the set of multiple, separate documents; and after detecting the first input and in response to detecting, via the one or more input devices, a second input corresponding to the set of multiple, separate documents, wherein the second input is different from the first input: in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and in accordance with a determination that the separate input does not satisfy the set of one or more criteria, displaying, via the one or more display generation components, the user interface without the modification to the set of one or more items.

In some embodiments, a non-transitory computer-readable storage medium storing one or more programs configured to be executed by one or more processors of a computer system that is in communication with one or more input devices and one or more display generation components is described. In some embodiments, the one or more programs includes instructions for: in response to detecting, via the one or more input devices, a first input corresponding to a set of multiple, separate documents, displaying, via the one or more display generation components, a user interface including a set of one or more items, extracted from the set of multiple, separate documents; and after detecting the first input and in response to detecting, via the one or more input devices, a second input corresponding to the set of multiple, separate documents, wherein the second input is different from the first input: in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and in accordance with a determination that the separate input does not satisfy the set of one or more criteria, displaying, via the one or more display generation components, the user interface without the modification to the set of one or more items.

In some embodiments, a transitory computer-readable storage medium storing one or more programs configured to be executed by one or more processors of a computer system that is in communication with one or more input devices and one or more display generation components is described. In some embodiments, the one or more programs includes instructions for: in response to detecting, via the one or more input devices, a first input corresponding to a set of multiple, separate documents, displaying, via the one or more display generation components, a user interface including a set of one or more items, extracted from the set of multiple, separate documents; and after detecting the first input and in response to detecting, via the one or more input devices, a second input corresponding to the set of multiple, separate documents, wherein the second input is different from the first input: in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and in accordance with a determination that the separate input does not satisfy the set of one or more criteria, displaying, via the one or more display generation components, the user interface without the modification to the set of one or more items.

In some embodiments, a computer system configured to communicate with one or more input devices and one or more display generation components is described. In some embodiments, the computer system comprises one or more processors and memory storing one or more programs configured to be executed by the one or more processors. In some embodiments, the one or more programs includes instructions for: in response to detecting, via the one or more input devices, a first input corresponding to a set of multiple, separate documents, displaying, via the one or more display generation components, a user interface including a set of one or more items, extracted from the set of multiple, separate documents; and after detecting the first input and in response to detecting, via the one or more input devices, a second input corresponding to the set of multiple, separate documents, wherein the second input is different from the first input: in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and in accordance with a determination that the separate input does not satisfy the set of one or more criteria, displaying, via the one or more display generation components, the user interface without the modification to the set of one or more items.

In some embodiments, a computer system configured to communicate with one or more input devices and one or more display generation components is described. In some embodiments, the computer system comprises means for performing each of the following steps: in response to detecting, via the one or more input devices, a first input corresponding to a set of multiple, separate documents, displaying, via the one or more display generation components, a user interface including a set of one or more items, extracted from the set of multiple, separate documents; and after detecting the first input and in response to detecting, via the one or more input devices, a second input corresponding to the set of multiple, separate documents, wherein the second input is different from the first input: in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and in accordance with a determination that the separate input does not satisfy the set of one or more criteria, displaying, via the one or more display generation components, the user interface without the modification to the set of one or more items.

In some embodiments, a computer program product is described. In some embodiments, the computer program product comprises one or more programs configured to be executed by one or more processors of a computer system that is in communication with one or more input devices and one or more display generation components. In some embodiments, the one or more programs include instructions for: in response to detecting, via the one or more input devices, a first input corresponding to a set of multiple, separate documents, displaying, via the one or more display generation components, a user interface including a set of one or more items, extracted from the set of multiple, separate documents; and after detecting the first input and in response to detecting, via the one or more input devices, a second input corresponding to the set of multiple, separate documents, wherein the second input is different from the first input: in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and in accordance with a determination that the separate input does not satisfy the set of one or more criteria, displaying, via the one or more display generation components, the user interface without the modification to the set of one or more items.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient processes and interfaces for accessing content, thereby increasing the effectiveness, efficiency, and user satisfaction with such devices. Such processes and interfaces may complement or replace other processes for accessing content.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations in accordance with some embodiments.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6O illustrate exemplary user interfaces for accessing content in accordance with some embodiments.
FIG. 7 is a flow diagram illustrating a process for accessing content in accordance with some embodiments.

### DETAILED DESCRIPTION

The following description sets forth exemplary processes, parameters, and the like. It should be recognized, however, that such description is not intended as a limitation on the scope of the present disclosure but is instead provided as a description of exemplary embodiments.

There is a need for electronic devices that provide efficient processes and interfaces for accessing content. For example, action items can be dynamically identified from a repository allowing display of such action items to be updated based on actions associated with and/or unrelated to the repository. For another example, answers to questions related to a repository can be dynamically updated as those answers change from changes to the repository. For another example, lists of content can be categorized by user-defined categories that can be reused whenever displaying such lists. Such techniques can reduce the cognitive burden on a user who accesses content, thereby enhancing productivity. Further, such techniques can reduce processor and battery power otherwise wasted on redundant user inputs.

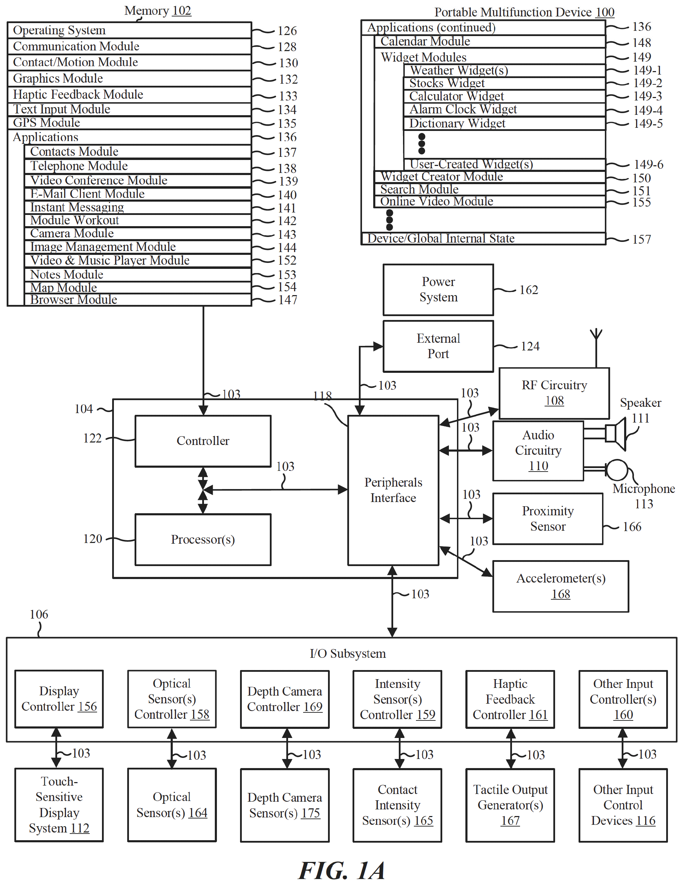

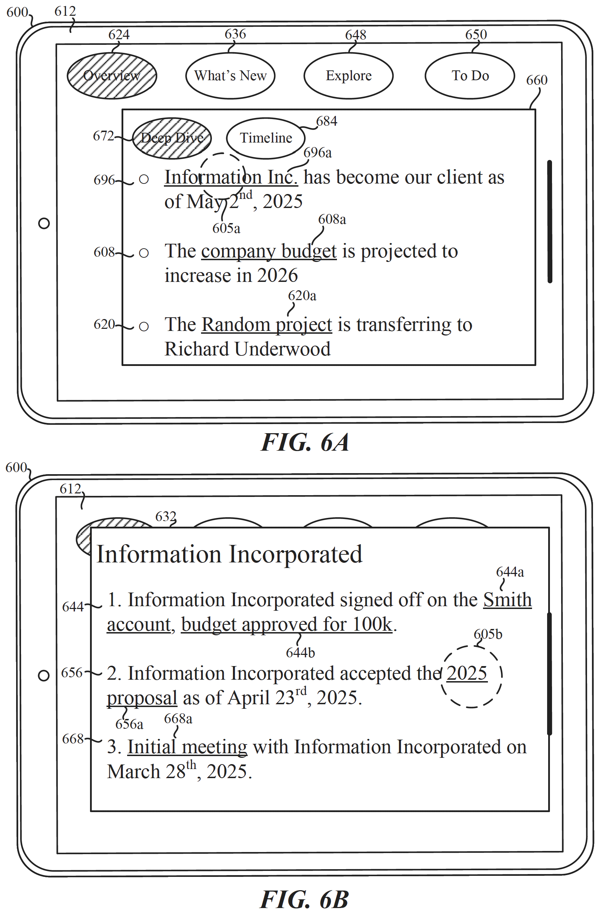

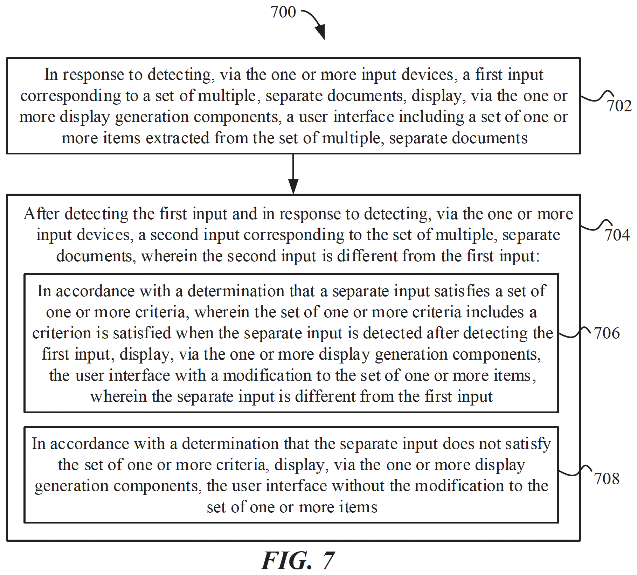

Below, FIGS. 1A-1B, 2, 3A-3G, 4A-4B, and 5A-5B provide a description of exemplary devices for performing the techniques for accessing content. FIGS. 6A-6O illustrate exemplary user interfaces for accessing content in accordance with some embodiments. FIG. 7 is a flow diagram illustrating a process for accessing content in accordance with some embodiments. The user interfaces in FIGS. 6A-6O are used to illustrate the processes described below, including the processes in FIG. 7.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in processes described herein where one or more steps are contingent upon one or more conditions having been met, it should be understood that the described processes can be repeated in multiple repetitions so that over the course of the repetitions all of the conditions upon which steps in the process are contingent have been met in different repetitions of the process. For example, if a process requires performing a first step if a condition is satisfied, and a second step if the condition is not satisfied, then a person of ordinary skill would appreciate that the claimed steps are repeated until the condition has been both satisfied and not satisfied, in no particular order. Thus, a process described with one or more steps that are contingent upon one or more conditions having been met could be rewritten as a process that is repeated until each of the conditions described in the process has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a process until all of the conditions upon which steps in the process are contingent have been met. A person having ordinary skill in the art would also understand that, similar to a process with contingent steps, a system or computer readable storage medium can repeat the steps of a process as many times as are needed to ensure that all of the contingent steps have been performed.

Although the following description uses terms "first," "second," etc. to describe various elements, these elements should not be limited by the terms unless explicitly stated with an order and/or that they are separate and/or different. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

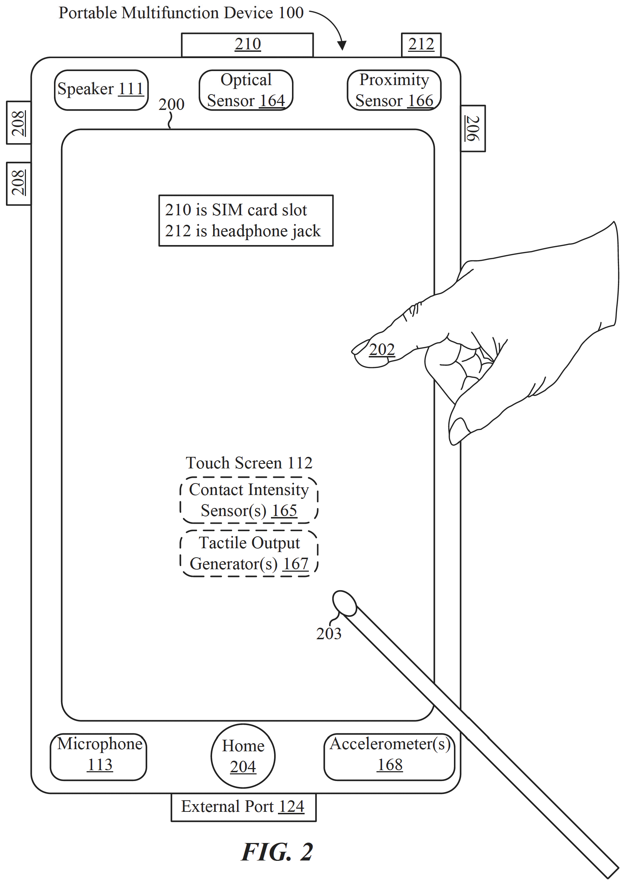

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

In some embodiments, a depth map (e.g., depth map image) contains information (e.g., values) that relates to the distance of objects in a scene from a viewpoint (e.g., a camera, an optical sensor, a depth camera sensor). In one embodiment of a depth map, each depth pixel defines the position in the viewpoint's Z-axis where its corresponding two-dimensional pixel is located. In some embodiments, a depth map is composed of pixels wherein each pixel is defined by a value (e.g., 0 - 255). For example, the "0" value represents pixels that are located at the most distant place in a "three dimensional" scene and the "255" value represents pixels that are located closest to a viewpoint (e.g., a camera, an optical sensor, a depth camera sensor) in the "three dimensional" scene. In other embodiments, a depth map represents the distance between an object in a scene and the plane of the viewpoint. In some embodiments, the depth map includes information about the relative depth of various features of an object of interest in view of the depth camera (e.g., the relative depth of eyes, nose, mouth, ears of a user's face). In some embodiments, the depth map includes information that enables the device to determine contours of the object of interest in a z direction.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

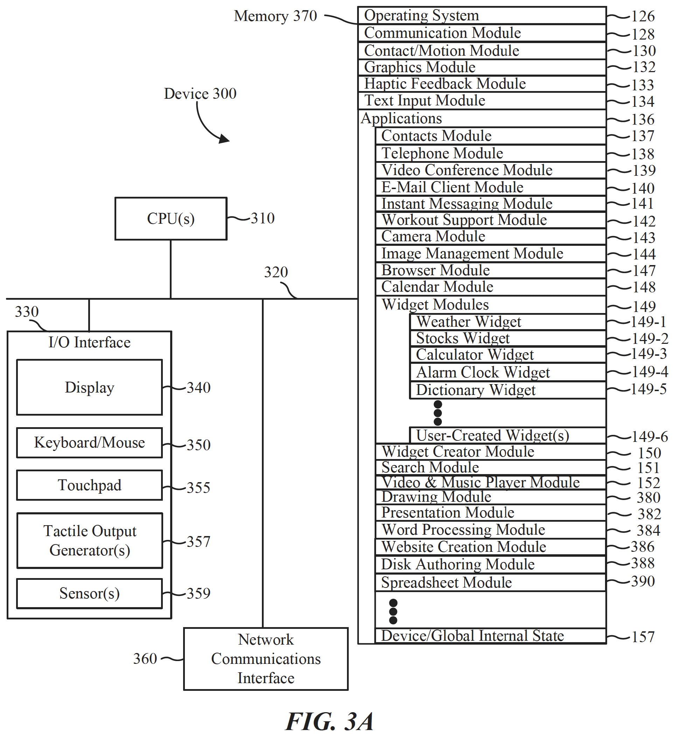

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the processes described in this application (e.g., the computer-implemented processes and other information processing processes described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

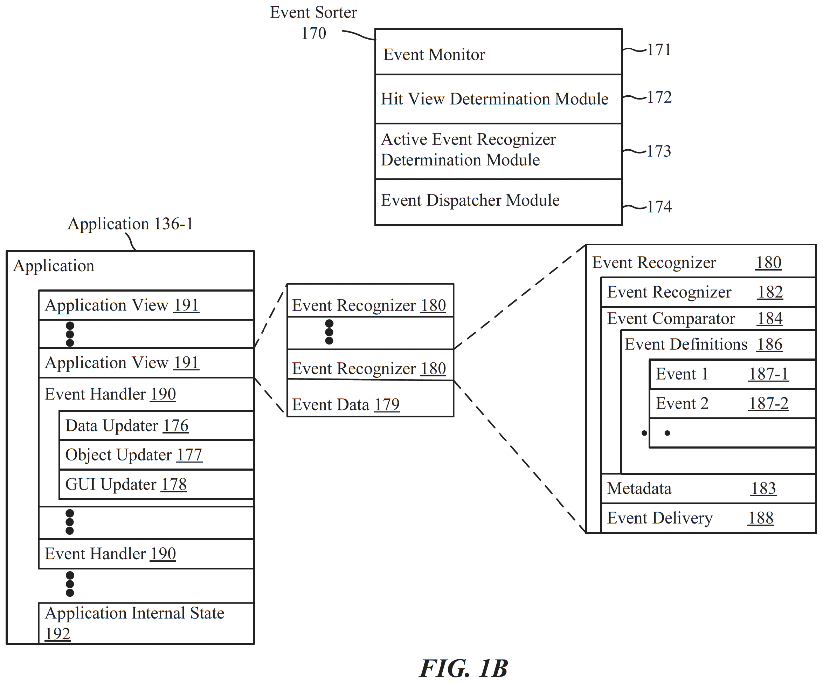

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits processes and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

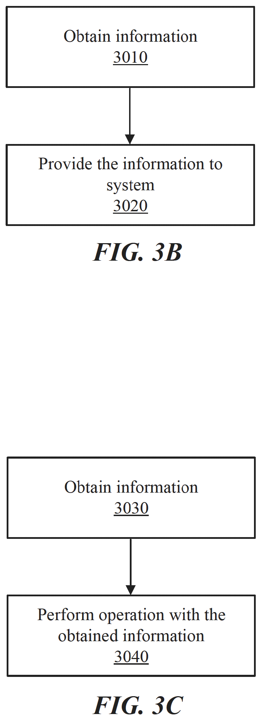

Implementations within the scope of the present disclosure include a computer-readable storage medium that encodes instructions organized as an application (e.g., application 3160) that, when executed by one or more processing units, control an electronic device (e.g., device 3150) to perform the process of FIG. 3B, the process of FIG. 3C, and/or one or more other processes and/or methods described herein.

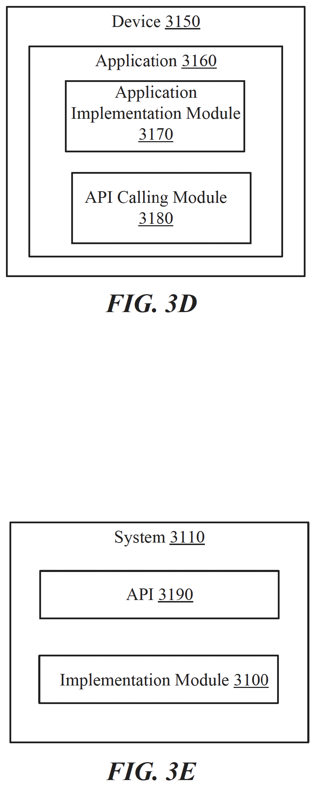

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first party application). In some embodiments, application 3160 is an application that is provided to device 3150 via an operating system update file (e.g., a first party application or a second party application). In some embodiments, application 3160 is an application that is provided via an application store. In some embodiments, the application store can be an application store that is pre-installed on device 3150 at purchase (e.g., a first party application store). In some embodiments, the application store is a third-party application store (e.g., an application store that is provided by another application store, downloaded via a network, and/or read from a storage device).

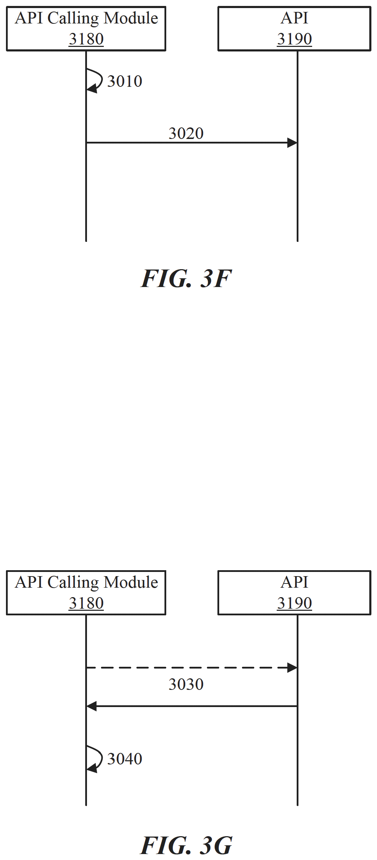

Referring to FIG. 3B and FIG 3F, application 3160 obtains information (e.g., 3010). In some embodiments, at 3010, information is obtained from at least one hardware component of device 3150. In some embodiments, at 3010, information is obtained from at least one software module of device3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information, electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the process of FIG. 3B and/or the process of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the process of FIG. 3B and/or the process of FIG. 3C by calling an application programming interface (API) (e.g., API 3190) provided by system 3110. In some embodiments, application 3160 performs at least a portion of the process of FIG. 3B and/or the process of FIG. 3C without calling API 3190.

In some embodiments, one or more steps of the process of FIG. 3B and/or the process of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low-level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing a secure connection, such as with an accessory), a device detection API (e.g., for locating nearby devices, such as media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation module 3100 is a system (e.g., operating system, and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, and/or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example when an input is detected, the direct sensor data is frequently processed into one or more input events that are provided (e.g., via an API) to a receiving software process that makes some determination based on the input events, and then information is sent (e.g., via an API) to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is a third-party application (e.g., an application that is provided by an application store, downloaded via a network, and/or read from a storage device). In some embodiments, the application controls the first computer system to perform process 700 (FIG. 7) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the different module and the implementation module. In some embodiments, API 3190 defines a first API call that can be provided by API-calling module 3180.The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

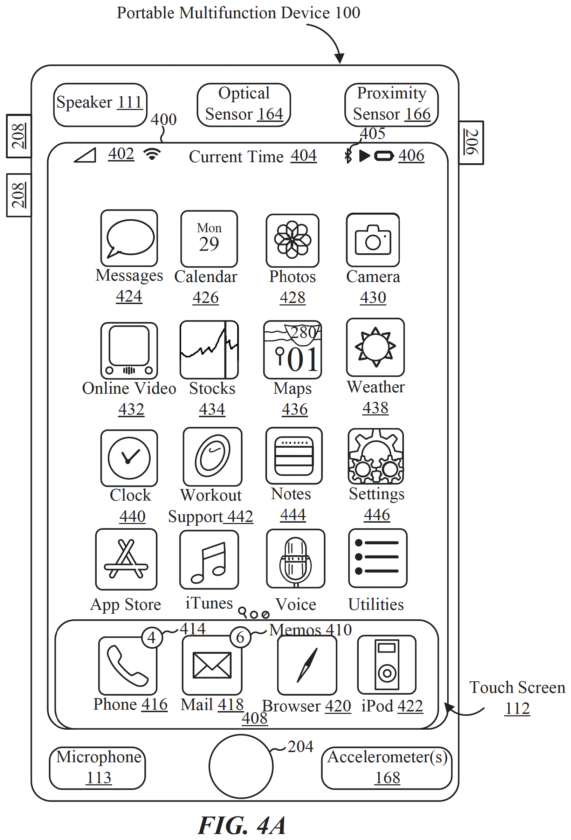

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   o Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   o Icon 424 for IM module 141, labeled "Messages;"
   o Icon 426 for calendar module 148, labeled "Calendar;"
   o Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   o Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

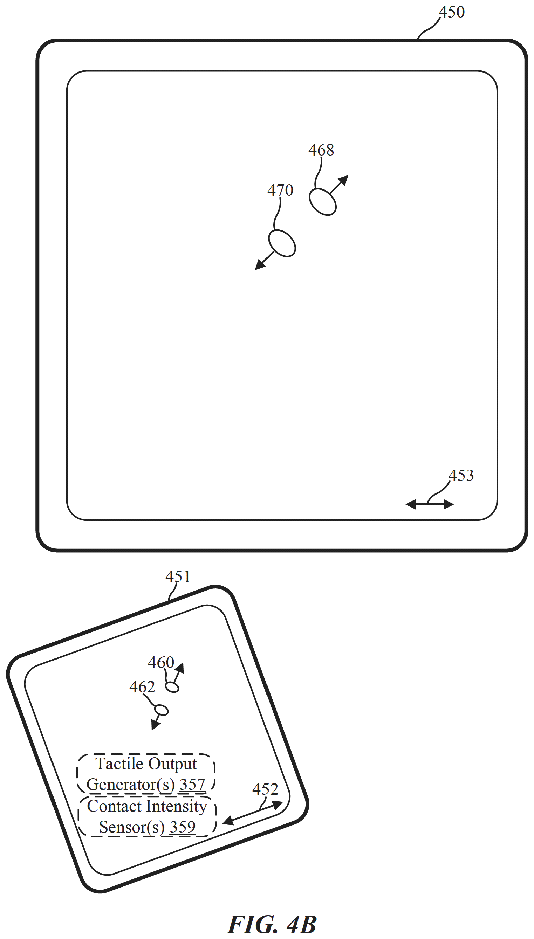

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar processes are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

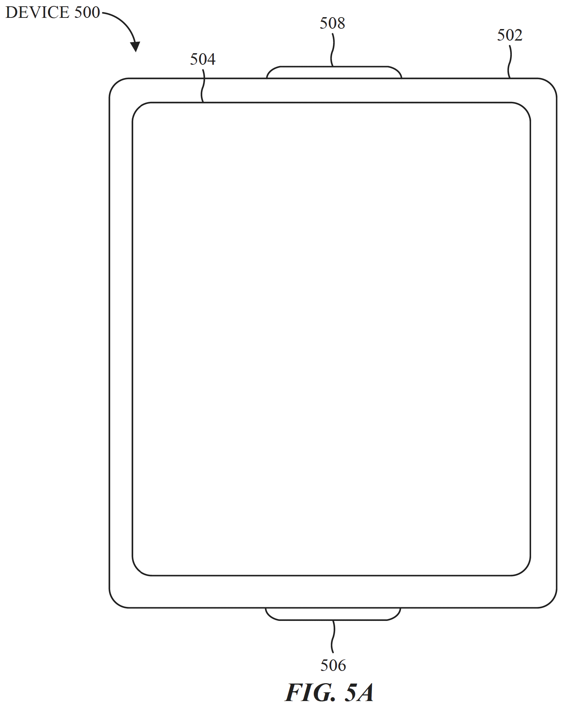

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

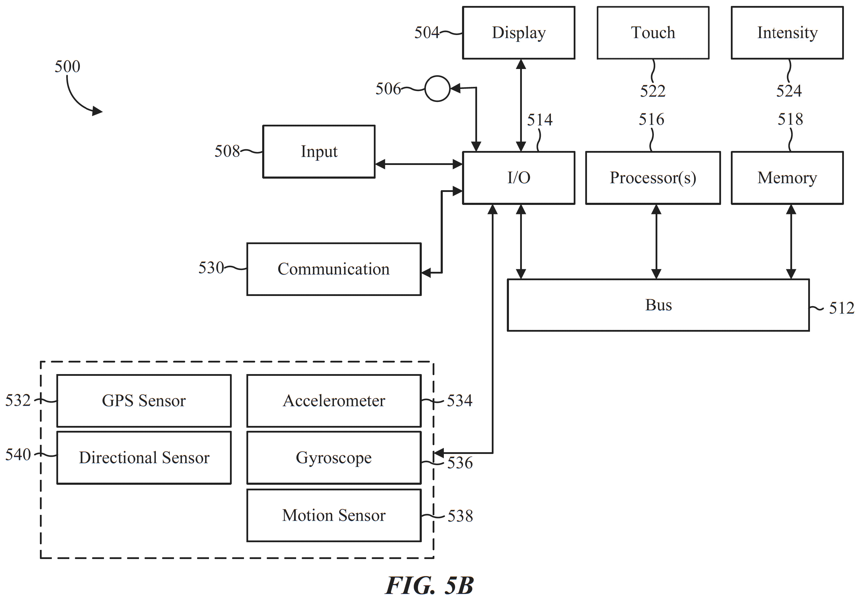

FIG. 5B depicts exemplary personal electronic device 500. In some embodiments, device 500 can include some or all of the components described with respect to FIGS. 1A, 1B, and 3A-3G. Device 500 has bus 512 that operatively couples I/O section 514 with one or more computer processors 516 and memory 518. I/O section 514 can be connected to display 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including process 700 (FIG. 7). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A-3G, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

It should be recognized that an input detected via one or more input devices can include one or more inputs, such as a selection input, a non-selection input, a movement input, a non-movement input, an air gesture input (sometimes referred to as an air gesture as described above), a non-air gesture input, a gaze input, a non-gaze input, a verbal input, and/or a non-verbal input. In some embodiments, a selection input is an input that chooses and/or selects a subject (e.g., an element, a user interface element, a user interface object, a user interface, a person, a user, an animal, an electronic device, a computer system, and/or an object) from multiple subjects or a state from multiple states. In some embodiments, a selection input specifies a subject in which to perform an operation. Examples of a selection input include a tap input, a verbal input, an audible command, a gaze input, an air gesture input, a mouse click, a squeeze input of a portion of an electronic stylus, a blink of one or more eyes of a subject, depression of rotatable input mechanism, and/or a submission of a physical hardware element. In some embodiments, a non-selection input is an input that does not correspond to a user interface element being displayed. In some embodiments, a non-selection input does not specify a subject for which to perform an operation. Examples of a non-selection input include a verbal input, an audible request, an audible command, an audible statement, a movement input, a hold-and-drag input, a gaze input, an air gesture input, and/or a mouse movement. In some embodiments, a movement input is an input that starts at a first position and moves to a second position different from the first position. In such embodiments, the movement input can end at the second position or move back to the first position. Examples of a movement input include a swipe gesture input, a flick gesture input, movement of a subject, movement of a mouse, movement of an input on a touch-sensitive surface, an air gesture moving from one location to another, rotation of a physical input mechanism, and/or rotation of an electronic stylus. In some embodiments, a non-movement input is an input that does not start at a first position and move to a second position different from the first position before ending at the second position or moving back to the first position. Examples of a non-movement input include a verbal input, an audible request, an audible command, an audible statement, a tap input, a hold-and-drag input, a gaze input, an air gesture input, mouse movement, and/or a mouse click. Examples of an air gesture input include a hand gesture to pick up, a hand gesture to press, an air-tap gesture, an air-swipe gesture, an air pinch gesture, air de-pinch gesture, a tap-and-hold air gesture, a hand rotation, and/or a clench-and-hold air gesture. In some embodiments, multiple inputs are combined to represent a single input, such as an air gesture input combined with a selection input where the air gesture input or the gaze input identifies a target and the selection input determines when the target should be identified.

Attention is now directed towards embodiments of user interfaces ("UI") and associated processes that are implemented on an electronic device, such as portable multifunction device 100, device 300, or device 500.

FIGS. 6A-6O illustrate exemplary user interfaces for displaying content in accordance with some embodiments. The user interfaces in these figures are used to illustrate the processes described below, including the processes in FIG. 7.

FIGS. 6A-6O illustrate computer system 600 as a tablet. It should be recognized that computer system 600 can be other types of computer systems such as a smart phone, a smart watch, a laptop, an accessory, a personal gaming system, a desktop computer, a fitness tracking device, a communal device, and/or a head-mounted display (HMD) device. In some embodiments, computer system 600 includes and/or is in communication with one or more input devices (e.g., a sensor, a camera, a lidar detector, a motion sensor, an infrared sensor, a touch-sensitive surface, a physical input mechanism, and/or a microphone). In some embodiments, computer system 600 includes and/or is in communication with one or more output devices (e.g., a display screen, a projector, a touch-sensitive display, and/or a speaker). In some embodiments, computer system 600 includes one or more components and/or features described above in relation to computer system 100 and/or electronic device 200.

FIGS. 6A-6O illustrate computer system 600 managing, organizing, summarizing, and/or displaying documents in a repository. In some embodiments, the repository is included in or at least some of the documents are stored by computer system 600. In some embodiments, the repository is included in or at least some of the documents are stored by a server. In either of such embodiments, the repository can provide content to be output by computer system 600. For ease of discussion, computer system 600 will be used below as the actor performing operations. It should be recognized that the repository, a server in communication with the repository, a system process of computer system 600, or an application of computer system 600 can perform one or more of such operations.

In some embodiments, computer system 600 utilizes a large language model (LLM) to extract information from the documents in the repository. With the information, computer system 600 generates summaries and/or provides results corresponding to the documents to allow a user to find, view, and/or inspect documents in the repository and/or obtain an overview of different documents without having to manually go through the repository. In some embodiments, the LLM is a local model on computer system 600. In other embodiments, the LLM is a remote service and computer system 600 uses the service that provides the LLM.

As illustrated in FIG. 6A, computer system 600 displays management user interface 612, which is a dashboard for accessing the repository. It should be recognized that management user interface 612 can take many different forms, including a webpage, a widget, a user interface of an application, and/or a user interface of an operating system of computer system 600.

As illustrated in FIG. 6A, management user interface 612 includes overview control 624, new control 636, explore control 648, to-do control 650, and summary region 660. It should be recognized that more, fewer, and/or different elements can be included in management user interface 612. For example, additional navigation controls and/or additional regions related to the repository can be displayed within management user interface 612.

As illustrated in FIG. 6A, overview control 624 is selected, indicating that management user interface 612 includes an overview of the repository (e.g., summary region 660). In some embodiments, management user interface 612 includes different types of overviews, each overview able to be selected between. For example, management user interface 612 can include a quick overview that has a limited word count and/or topic count as compared to a detailed overview.

As illustrated in FIG. 6A, summary region 660 includes deep dive control 672, timeline control 684, and a set of summaries. In some embodiments, computer system 600 uses the LLM to generate the set of summaries. For example, computer system 600 can use the LLM to create (e.g., generate, output, and/or provide) summaries of the repository (e.g., providing information about key items, recent changes, and/or overarching topics). As illustrated in FIG. 6A, the set of summaries includes summary 696 (e.g., text summarizing a recently acquired client "Information Inc."), summary 608 (e.g., text summarizing a projected budget increase), and summary 620 (e.g., text summarizing a change in assignment for a sales project). In some embodiments, summary 696, summary 608, and/or summary 620 is generated by the LLM based on a second set of summaries as will be discussed with reference to FIG. 6B.

In some embodiments, relevant key terms within the set of summaries are hyperlinked (e.g., key term 696a, 608a, and 620a). In such embodiments, each hyperlinked key term can be extracted from documents stored in the repository by the LLM. For example, key term 696a can be a company name extracted from a recent series of proposals and agreements culminating in a services agreement. For another example, key term 620a can be a project name extracted from a recent series of documents resulting in the transference of a project to another employee. In some embodiments, a hyperlinked key term is generated based on an inference made based on documents within the repository. For example, key term 608a can be a budgetary inference based on a change in budget term across a series of contracts.

At FIG. 6A, computer system 600 detects input 605a directed to key term 696a. It should be recognized that input 605a is an example of a selection input as a tap input, but can be other inputs, such as a verbal input (e.g., "Show me information about Information Inc."), an air gesture, and/or a mouse click.

As illustrated in FIG. 6B, in response to detecting input 605a, computer system 600 displays key information region 632 overlapping management user interface 612. In some embodiments, computer system 600 displays a separate user interface that includes content of key information region 632 (e.g., without maintaining display of at least a portion of management user interface 612).

As illustrated in FIG. 6B, key information region 632 is a user interface element that includes distinct summaries corresponding to Information Inc. (e.g., more information connected to key term 696a). For example, key information region 632 includes more specific set of summaries (e.g., as compared to FIG. 6A), such as summary 644 (e.g., text summarizing the recent budget approval with Information Inc), summary 656 (e.g., text summarizing a proposal agreement with Information Inc), and summary 668 (e.g., text summarizing the initial meeting with Information Inc). It should be recognized that computer system 600 can use the LLM to generate the broader summary of summary 696 based on the more specific set of summaries (e.g., summary 644, summary 656, and summary 668) within key information region 632.

As illustrated in FIG. 6B, summaries include hyperlinked key terms (e.g., key term 644a, key term 644b, key term 656a, and key term 668a). At FIG. 6B, each hyperlinked key term is extracted from separate documents with data specifically relevant and/or related to Information Inc. In some embodiments, computer system 600 extracts key terms from documents marked and/or organized in a local folder for Information Inc. documents. In other embodiments, computer system 600 extracts key terms from all documents in the repository based on Information Inc. qualifiers. For example, computer system 600 can check the title, content, and/or the creator of a document in an effort to confirm that the document corresponds to Information Inc.

At FIG. 6B, computer system 600 detects input 605b directed to key term 656a. It should be recognized that input 605b is an example of a selection input as a tap input, but can be other inputs, such as a verbal input (e.g., "Show me the 2025 proposal for Information Inc."), an air gesture, and/or a mouse click.

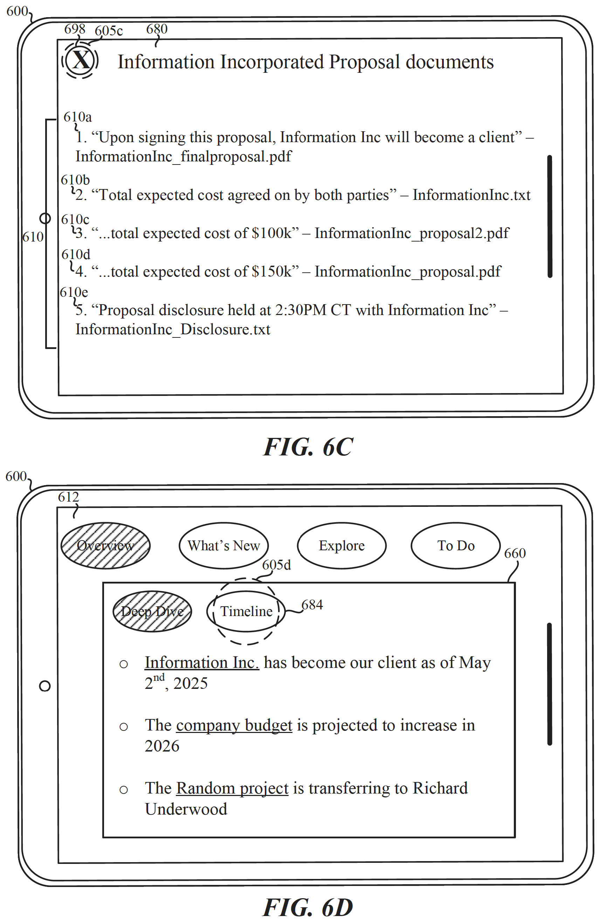

As illustrated in FIG. 6C, in response to detecting input 605b, computer system 600 displays source region 680 overlapping management user interface 612. In some embodiments, computer system 600 displays a separate user interface (e.g., separate from management user interface 612) that includes content of source region 680. As illustrated in FIG. 6C, source region 680 includes exit control 698 and document list 610. Document list 610 includes portions from documents within the repository, each portion sometimes referred to as an entry. In some embodiments, computer system 600 uses the LLM to generate the set of entries within document list 610. For example, computer system 600 can use the LLM to create (e.g., generate, output, and/or provide) entries corresponding to the proposal documents with Information Inc.

As illustrated in FIG. 6C, document list 610 includes entry 610a, entry 610b, entry 610c, entry 610d, and entry 610e. Each entry within document list 610 includes a quote from a document supporting extraction of the 2025 proposal key term and a title to the document that the quote is extracted from. In some embodiments, document list 610 is provided to allow access to documents identified within document list 610. In such embodiments, in response to detecting an input directed to one of entries (e.g., entry 610a, entry 610b, entry 610c, entry 610d, or entry 610e), computer system 600 displays the document corresponding to the selected entry.

In some embodiments, computer system 600 uses the LLM to extract information from entry 680a, entry 680b, entry 680c, entry 680d, and entry 680e to create the summaries illustrated in FIGS. 6A-6B. In such embodiments, computer system 600 can use the LLM to review the documents corresponding to the entries, organize them in a certain order, and/or select particular quotes and/or sections needed to generate summaries.

In some embodiments, entries within document list 610 are in chronological order with the most recent document at the top. In some embodiments, the order is based on another factor, such as oldest displayed at the top, people who worked on it, or if the document has been completed and/or approved. In other embodiments, the order is based on relevance to the key term. For example, documents can be included closer to the top based on their relevance to the key term.

At FIG. 6C, computer system 600 detects input 605c directed to exit control 698. It should be recognized that input 605c is an example of a selection input as a tap input, but can be other inputs, such as a verbal input (e.g., "Return to the home screen."), an air gesture, and/or a mouse click.

As illustrated in FIG. 6D, in response to detecting input 605c, computer system 600 returns to summary region 660 as illustrated in FIG. 6A. At FIG. 6D, computer system 600 detects input 605d directed to timeline control 684. It should be recognized that input 605d is an example of a selection input as a tap input, but can be other inputs, such as a verbal input (e.g., "Can you show me my timeline?"), an air gesture, and/or a mouse click.

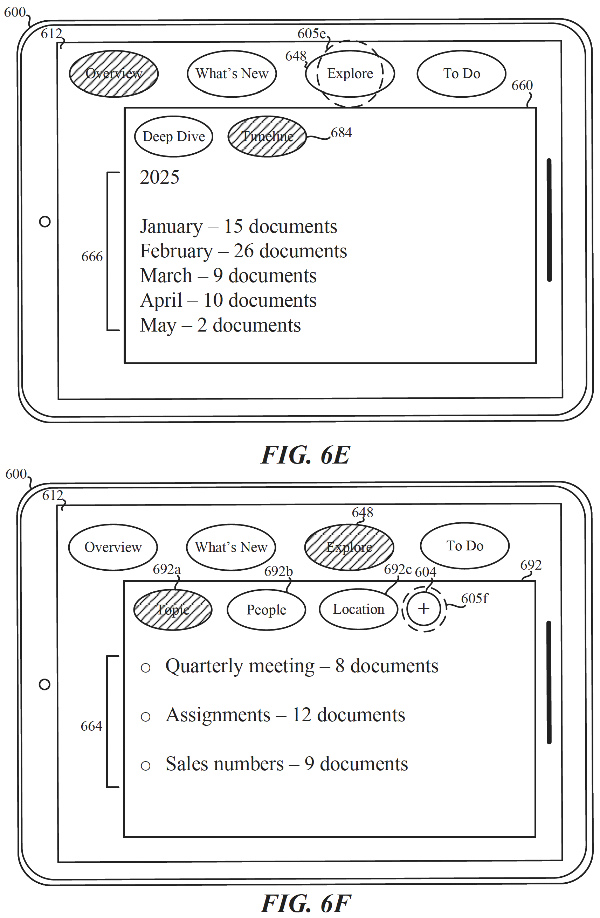

As illustrated in FIG. 6E, in response to detecting input 605d, computer system 600 displays timeline list 666. Timeline list 666 includes a list of documents in the repository organized by month and year (e.g., 2025). In some embodiments, in response to detecting an input directed to a month displayed in timeline list 666, computer system 600 displays the list of documents corresponding to that month. At FIG. 6E, computer system 600 detects input 605e directed to explore control 648. It should be recognized that input 605e is an example of a selection input as a tap input, but can be other inputs, such as a verbal input (e.g., "Take me to the explore page."), an air gesture, and/or a mouse click.

As illustrated in FIG. 6F, in response to detecting input 605e, computer system 600 displays explore region 692. Explore region 692 includes topic category 692a, people category 692b, location category 692c, and add control 604. As illustrated in FIG. 6E, topic category 692a is selected, indicating that documents are being categorized by topic within topic list 664. In some embodiments, computer system 600 uses the LLM to organize the set of documents within topic list 664. For example, computer system 600 can use the LLM to organize the set of documents within topic list 664 in accordance with the topic category to identify different topics and the number of topics within each topic.

In some embodiments, explore region 692 is updated if another document corresponding to the existing category (e.g., topic category 692a, people category 692b, and/or location category 692c) is uploaded to the repository. For example, if a document is uploaded that falls under the "Quarterly meeting" topic, topic list 664 is updated to reflect the change (e.g., increasing the total number of documents under "Quarterly meeting" from eight to nine). For another example, if a document is uploaded that falls under people category 692b, the list of documents corresponding to people category 692b is updated to reflect the change.

In some embodiments, other portions of management user interface 612 are updated based on uploaded documents. For example, if a document is uploaded with an amended proposal budget of $150,000 for Information Inc., the LLM can generate a new entry within document list 610 (e.g., as illustrated in FIG. 6C) and can update summary 644 and key term 644b (e.g., as illustrated in FIG. 6B) to reflect the document.

At FIG. 6F, computer system 600 detects input 605f directed to add control 604. It should be recognized that input 605f is an example of a selection input as a tap input, but can be other inputs, such as a verbal input (e.g., "I need to add a category."), an air gesture, and/or a mouse click.

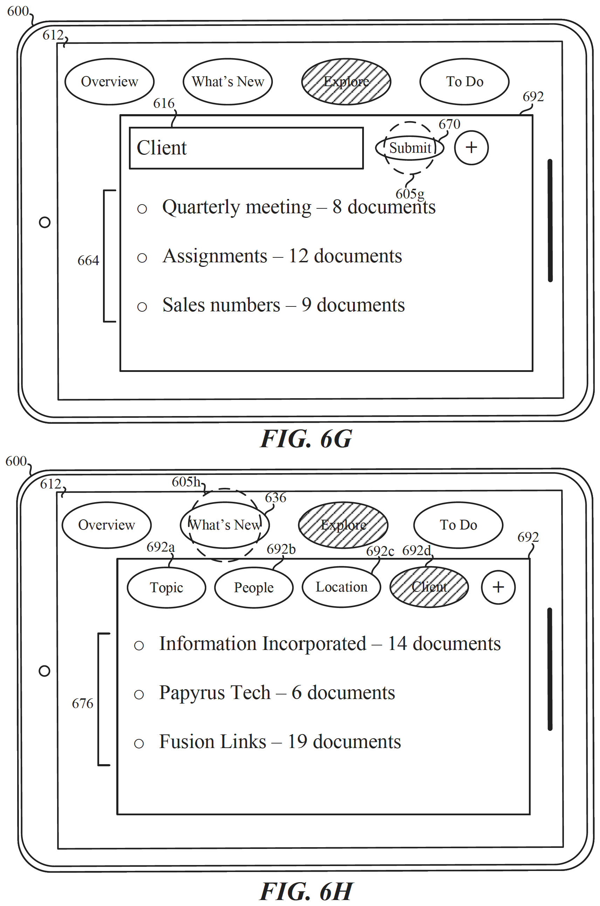

As illustrated in FIG. 6G, in response to detecting input 605f, computer system 600 displays entry field 616 and submit control 670 overlapping topic category 692a, people category 692b, and location category 692c. In some embodiments, computer system 600 displays a separate user interface that includes entry field 616 and submit control 670. After displaying entry field 616, computer system 600 detects a user entering the word "Client" into entry field 616, indicating that the user wants to create a category to organize documents in the repository by client. It should be recognized that creating a category results in computer system 600 using the LLM to organize and/or generate summaries within explore region 692 based on the created category (e.g., similar to displaying topic list 664 corresponding to topic category 692a) to help the user use and/or manage documents corresponding to the created category without opening all the documents. Additionally, computer system 600 maintains display of the category control for future use.

At FIG. 6G, computer system 600 detects input 605g directed to submit control 670. It should be recognized that input 605g is an example of a selection input as a tap input, but can be other inputs, such as a verbal input (e.g., "Create a 'client' category."), an air gesture, and/or a mouse click.

As illustrated in FIG. 6H, in response to detecting input 605g, computer system 600 displays client category 692d with topic category 692a, people category 692b, and location category 692c. As illustrated in FIG. 6H, client category 692d is selected, indicating that displayed documents are organized by client (e.g., as extracted and/or gather by the LLM).

Additionally, computer system 600 ceases display of topic list 664 and displays client list 676. In some embodiments, computer system 600 uses the LLM to organize the set of documents within client list 676. For example, computer system 600 can use the LLM to organize the set of documents within client list 676 in accordance with the client category to allow the user to access documents organized by client. It should be recognized that, if a user directs an input to the Information Incorporated documents, computer system 600 can display the complete list of documents (and/or a set of summaries) corresponding to Information Inc., including those illustrated in FIG. 6C.

At FIG. 6H, computer system 600 detects input 605h directed to new control 636. It should be recognized that input 605h is an example of a selection input as a tap input, but can be other inputs, such as a verbal input (e.g., "Show me what's new."), an air gesture, and/or a mouse click.

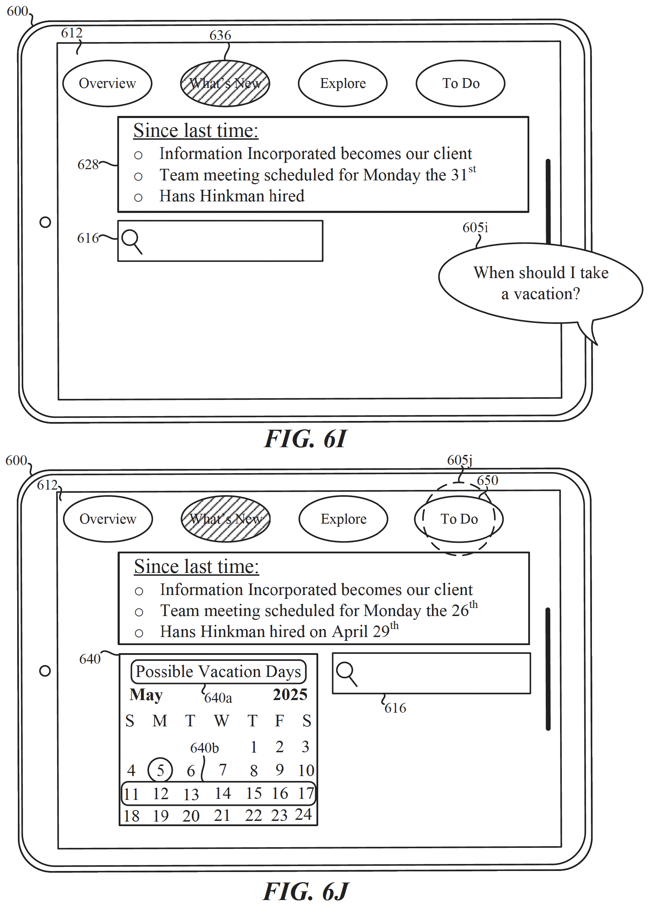

As illustrated in FIG. 6I, in response to detecting input 605h, computer system 600 displays update region 628 and entry field 616. Update region 628 is populated with information based on documents and/or references stored in the repository. In some embodiments, update region 628 is populated with information based on activity inferred by the LLM (e.g., such as meeting notes, schedules, and/or messages) and/or based on information found in the repository.

At FIG. 6I, computer system 600 detects input 605i ("When should I take a vacation?") directed to computer system 600. It should be recognized that input 605i is an example of a non-selection input as a verbal input but can be other inputs, such as multiple tap inputs directed to a keyboard in entry field 616.

As illustrated in FIG. 6J, in response to detecting input 605i, computer system 600 displays calendar widget 640. It should be recognized that calendar widget 640 is a widget within management user interface 612. It should be recognized that a widget is one example of a user interface element used with techniques described herein and that other types of user interface elements can be used, such as pop ups and/or user interfaces.

Calendar widget 640 includes vacation indicator 640a (e.g., "Possible vacation days") and vacation days indicator 640b around the week of May 11th-17th as a response to detecting input 605i. In particular, computer system 600 determines that the week of May 11th-17th is a good week for vacation due to the lack of work items during that week. In some embodiments, computer system 600 determines that the week of May 11th-17th is a good week for vacation through use of the LLM. In such embodiments, the LLM can provide the week of May 11th-17th due to inferences made based on extracting information from the repository and/or other activity within management user interface 612. For example, the LLM can determine that there are no meetings or presentations during that week based on information extracted from documents in the repository (e.g., inferring that since a current user is not a presenter in meetings and/or that the current user is not listed on any meeting memos during the week of May 11th-17th). For another example, the LLM can determine that the current user does not have any deadlines during that week based on information extracted from documents in the repository (e.g., inferring that since the current user is not listed as responsible for any documents and/or that the current user is not listed as a required party to any meeting during the week of May 11th-17th). As illustrated in FIG. 6J, in conjunction with displaying calendar widget 640, computer system 600 moves display of entry field 616 to the right.

In some embodiments, if a user were to ask about something corresponding to calendar widget 640, computer system 600 updates and/or emphasizes calendar widget 640. In other embodiments, each separate question (and/or different question that would cause an update) causes computer system 600 to display a new widget. In some embodiments, if a user were to ask about something that does not correspond to calendar widget 640 (and/or can be represented by another widget better than with calendar widget 640), computer system 600 adds another widget (e.g., separate from calendar widget 640) to management user interface 612.

At FIG. 6J, computer system 600 detects input 605j directed to to-do control 650. It should be recognized that input 605j is an example of a selection input as a tap input, but can be other inputs, such as a verbal input (e.g., "Show me my to-do list."), an air gesture, and/or a mouse click.

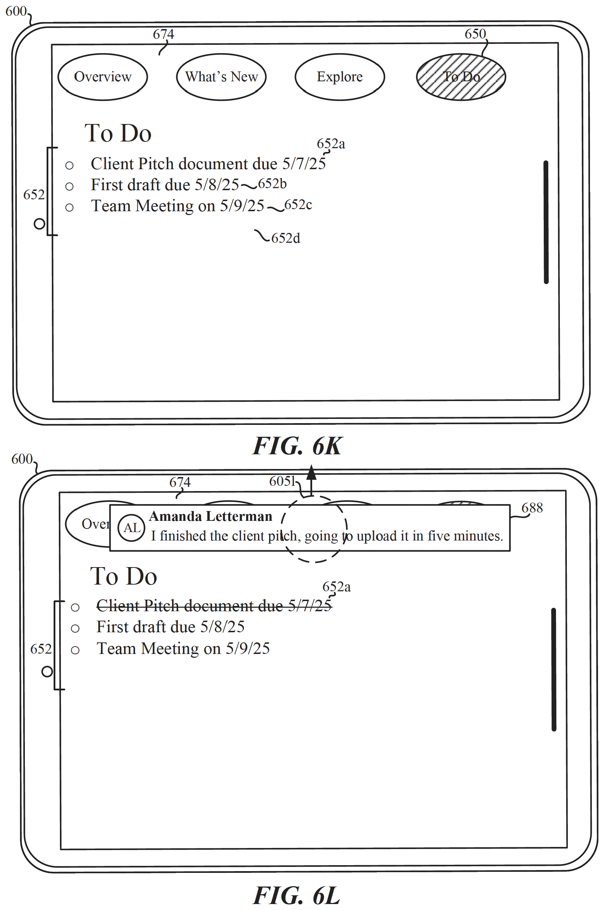

As illustrated in FIG. 6K, in response to detecting input 605j, computer system 600 displays to-do user interface 674. It should be recognized that, in some embodiments, computer system 600 can display a widget within management user interface 612 that includes content of to-do user interface 674 in addition to or rather than including such content within to-do user interface 674.

As illustrated in FIG. 6K, to-do user interface 674 includes list 652, including item 652a (e.g., a client pitch document), item 652b (e.g., a first draft due date), and item 652c (e.g., a team meeting). In some embodiment, items 652a-c are generated by using the LLM to extract information from documents within the repository. For example, the LLM can be used to create items 652a-c through summarizing information extracted from the documents within the repository.

In some embodiments, computer system 600 displays content in a different order and/or different content within list 652 depending on which user is using computer system 600. For example, in response to detecting that a first user is viewing list 652, computer system 600 displays list 652 with items that correspond to and/or are in an order specific to the first user (e.g., items 652a-c). For another example, in response to detecting that a second user (e.g., different from the first user) is viewing list 652, computer system 600 can display list 652 with items that correspond to and/or are in an order specific to the second user. In some embodiments, computer system 600 detects and differentiates different users based on who is logged into computer system 600, biometrics, a camera, a PIN, and/or through communication with a personal device.

In some embodiments, if a current user favorited certain key terms, computer system 600 prioritizes items within list 652 that are related to the favorited key terms. For example, if the current user favorited key term 644a (e.g., "Smith account"), computer system 600 can display items related to the Smith account at the top of list 652.

In some embodiments, items not assigned to and/or created by the current user are included in list 652 due to such items being determined to correspond to the current user via context (e.g., as determined by the LLM described above). For example, if there is a general work alert to attend a special meeting, computer system 600 can include a special meeting item in list 652 for the current user.

Time has passed between FIGS. 6K-6L. At FIG. 6L, computer system 600 receives a message from a coworker, Amanda. As illustrated in FIG. 6L, in response to receiving the message, computer system 600 displays notification 688 (e.g., a message informing that the coworker finished the client pitch and will upload it in five minutes).

At FIG. 6L, computer system 600 uses the LLM to make a determination that the content of notification 688 relates to list 652. More specifically, the content of notification 688 relates to item 652a (e.g., the coworker finished the client pitch document). As illustrated in FIG. 6L, in response to making a determination that the client pitch document is finished, computer system 600 alters list 652 to display item 652a as crossed out to indicate that item 652a no longer needs to be done. In other embodiments, list 652 is not updated until list 652 is re-displayed and/or requested to be updated. In other embodiments, item 652a is not crossed out and instead is just removed in response to receiving the message.

At FIG. 6L, computer system 600 detects input 6051, directed to notification 688. It should be recognized that input 6051 is an example of a non-selection input as a swipe input but can be other inputs, such as an air gesture and/or a verbal input (e.g., "Dismiss Amanda's message").

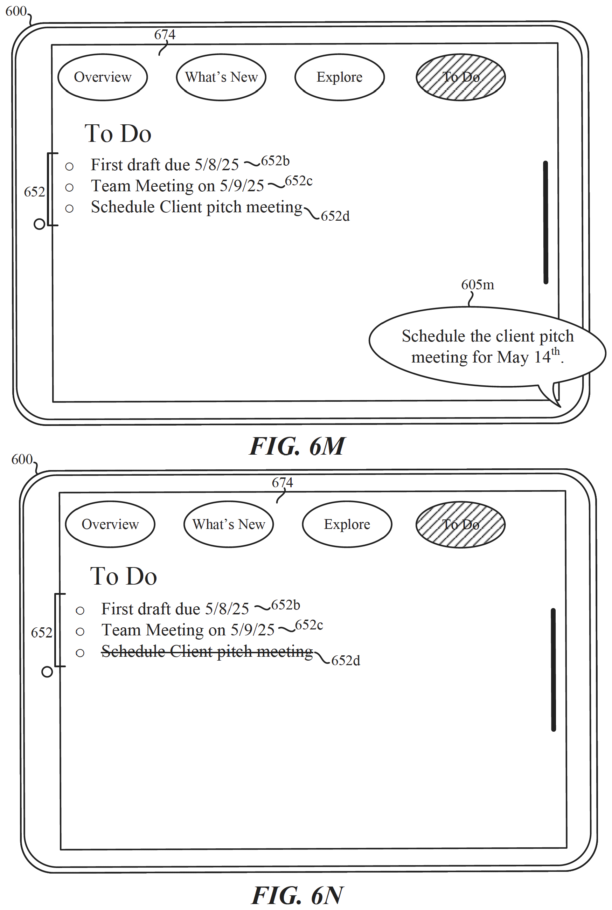

At FIG. 6M, in response to detecting input 6051, computer system 600 ceases display of notification 688. Additionally, at FIG. 6M, computer system 600 ceases display of item 652a. It should be recognized that computer system 600 is able to remove item 652a from list 652 based on a determination, using the LLM that, if the coworker finished the client pitch, there is no reason to continue displaying item 652a as something that needs to be done within list 652. In some embodiments, computer system 600 ceases display of item 652a after a predefined period of time. In other embodiments, computer system 600 ceases display of item 652a based on the inference that since the current user dismissed notification 688, that the current user understands that the task corresponding to item 652a is complete.

As illustrated in FIG. 6M, computer system 600 uses the LLM to alter list 652 by including item 652d (e.g., a client pitch meeting) within list 652. It should be recognized that computer system 600 displays item 652d based on a determination that, since the client pitch is done, a meeting should be scheduled to discuss the client pitch document. In some embodiments, computer system 600 displays item 652d based on work history (e.g., the current user always schedules a meeting to discuss client pitches). In other embodiments, computer system 600 displays item 652d based on referencing data from the repository. For example, computer system 600 can use the LLM to extract information from a policy document that every client pitch should be approved by management and uses that information to create item 652d to remind the current user that a client pitch meeting needs to be scheduled.

In some embodiments, computer system 600 alters list 652 in other ways. For example, in response to receiving another message from Amanda saying, "I just scheduled the client pitch meeting," computer system 600 uses the LLM to determine that the message corresponds to item 652d and alters list 652 to remove item 652d. For another example, in response to receiving a message from another coworker that the team meeting corresponding to item 652c has been pushed to 5/10/25, computer system 600 uses the LLM to alter list 652 to display item 652c as "Team meeting on 5/10/25".

In some embodiments, computer system 600 alters list 652 in response to detecting an input not directed to list 652, such as input 6051. For example, in response to determining that the current user sent a message to Amanda telling her that the client pitch looks great, computer system 600 can use the LLM to alter list 652 to remove item 652d. For another example, in response to detecting a verbal input, such as "Add client pitch review to my to-do list," computer system 600 can use the LLM to alter list 652 to add an item of "Review client pitch."

In some embodiments, computer system 600 alters list 652 in response to detecting an input directed to a separate application from the repository. For example, in response to detecting that the current user messaged her friend Jane that she's excited for dinner at 7:00PM tonight through a private messaging application, through use of the LLM, computer system 600 can alter list 652 to add an item of "Dinner with Jane tonight at 7:00PM."

In some embodiments, computer system 600 alters list 652 in response to a determination that an additional document has been uploaded to the repository. For example, in response to determining that that Amanda uploaded the client pitch meeting computer system 600 can use the LLM to alter list 652 to add an item of "Review client pitch."

At FIG. 6M, a coworker tells the current user that the client wants the pitch meeting scheduled on May 14th. At FIG. 6M, computer system 600 detects input 605m ("Schedule the client pitch meeting for May 14th.") directed to computer system 600. It should be recognized that input 605m is an example of a non-selection input as a verbal input but can be other inputs, such as multiple tap inputs directed to a keyboard.

As illustrated in FIG. 6N, in response to detecting input 605m (e.g., through use of the LLM), computer system 600 alters list 652 to display item 652d as crossed out to indicate that item 652d no longer needs to be acted on. In some embodiments, upon navigating back to management user interface 612 after list item 652d has been removed, computer system 600 displays calendar widget 640 with an indication of the scheduled client meeting. In such embodiments, computer system 600 ceases display of vacation indicator 640a and vacation days indicator 640b. In other embodiments, computer system 600 maintains display of vacation days indicator 640b when displaying the indication of the scheduled client meeting. In some embodiments, computer system 600 displays a new widget for client meetings that includes content corresponding to list item 652d that is distinct from calendar widget 640. In such embodiments, computer system 600 maintains display of calendar widget with the appearance illustrated in FIGS. 6J-6M.

In some embodiments, upon navigating back to management user interface 612 after list item 652d has been removed, computer system 600 displays content related to overview control (e.g., summary region 660) as updated. For example, computer system 600 can display a summary corresponding to list item 652d and any relevant information related to list item 652d (e.g., "Client Pitch meeting for Information Inc. scheduled for May 14th").

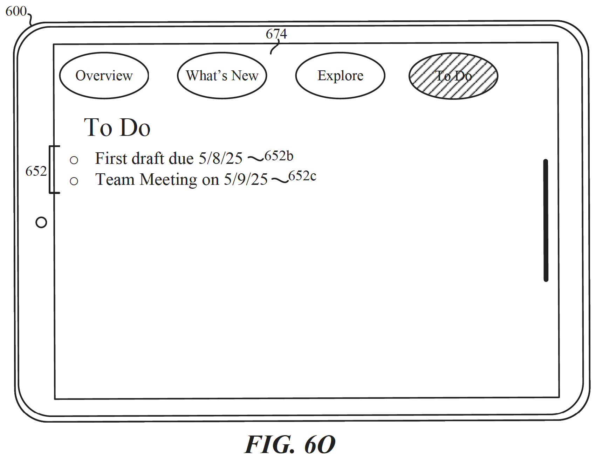

At FIG. 6O, computer system 600 ceases display of item 652d. It should be recognized that computer system 600 is able to remove item 652d from list 652 based on a determination that the client pitch meeting has been scheduled (e.g., there is no reason to continue displaying item 652d as something the current user needs to do within list 652).

As illustrated in FIGS. 6A-6O, the repository corresponding to management user interface 612 includes content corresponding to the current user's work domain. For example, as illustrated in FIGS. 6A-6O, the repository includes content specific to the current user's work domain, such as an overview of work documents, a work calendar, and/or a work to-do list. In some embodiments, the repository can include other domains, such as a personal domain and/or an exercise domain. For example, in response to selecting a personal domain, computer system 600 can display management user interface 612 with content corresponding to personal information of the current user, such an overview of the current user's personal documents, a private calendar, and/or a private to-do list. In some embodiments, each domain has a different corresponding repository.

In some embodiments, documents in the repository are assigned to domains based on which user is logged in. In other embodiments, the LLM assigns documents to different domains based on content.

In some embodiments, changes made to documents in one domain only affects that domain. For example, in response to detecting that a document was deleted in the personal domain, computer system 600 updates the overview of the personal domain and does not update the overview of the work domain. In other embodiments, changes made to documents in one domain affects all domains in the repository. For example, in response to detecting that a document was deleted in the personal domain, computer system 600 updates the overviews of the personal domain and the work domain.

FIG. 7 is a flow diagram illustrating a process (e.g., process 700) for accessing content in accordance with some embodiments. Some operations in process 700 are, optionally, combined, the orders of some operations are, optionally, changed, and some operations are, optionally, omitted.

As described below, process 700 provides an intuitive way for accessing content in accordance with some embodiments. Process 700 reduces the cognitive burden on a user, thereby creating a more efficient human-machine interface. For battery-operated computing devices, enabling a user to interact with such devices faster and more efficiently conserves power and increases the time between battery charges. Performing an operation when a set of conditions has been met without requiring further user input (such as by displaying a modification to a set of one or more items displayed within a user interface based on an input separate from the set of one or more items without requiring an input directed to the set of one or more items) enhances the operability of the device by reducing unnecessary inputs and/or steps to navigate through different user interfaces or sets of controls, reducing energy usage by the device. Reducing the number of inputs needed to perform an operation (such as by displaying a modification to a set of one or more items displayed within a user interface based on an input separate from the set of one or more items without requiring an input directed to the set of one or more items) enhances the operability of the device by reducing the number of inputs and time required to perform a particular operation, reducing energy usage by the device. Automatically deletion and/or removal of information (such as by modifying a set of one or more items within a user interface based on an input that satisfies an item of the set of one or more items without requiring an input directed to the item) improves privacy and security by limiting when that potentially sensitive information can be accessed.

In some embodiments, process 700 is performed at a computer system that is in communication (e.g., wired communication and/or wireless communication) with (and/or includes) one or more input devices (e.g., a camera, a depth sensor, a microphone, a hardware input mechanism, a rotatable input mechanism, a physical input mechanism, a mechanical button, a touch-sensitive button, a button, a crown, a knob, a dial, a physical slider, an accelerometer, a mouse, a keyboard, a touchpad, and/or a touch-sensitive surface) and one or more display generation components (e.g., a display screen, a projector, a head mounted display, and/or a touch-sensitive display). In some embodiments, the computer system is a watch, a phone, a tablet, a fitness tracking device, a processor, a head-mounted display (HMD) device, a communal device, a media device, a speaker, a television, an electronic device, and/or a personal computing device.

In response to detecting, via the one or more input devices, a first input (e.g., a voice input and/or a tap input) (e.g., 605h, 605j, or other inputs discussed with respect to FIG. 6J-6I) corresponding to (e.g., requesting information from, associated with, requesting display of content from, and/or related to) a set of multiple, separate documents (e.g., a repository of documents, a file system including multiple documents, and/or a location in storage that includes multiple documents) (e.g., as described above with respect to FIGS. 6A-6O), the computer system displays (702), via the one or more display generation components, a user interface (e.g., an application window, a web interface, and/or a widget) (e.g., 612 or 652) including a set of one or more items (e.g., 652a, 652b, 652c, and/or 652d), extracted from the set of multiple, separate documents (and/or a widget that includes a set of one or more items extracted from the set of multiple, separate documents). In some embodiments, the first input is a voice input such as a voice request and/or audible question directed to the computer system. In some embodiments, the first input is a tap and/or selection input such as an input on an icon and/or control to display the user interface. In some embodiments, the first input is an entry into an input field such as a series of inputs selecting a recommended entry and/or a text entry into an input field (e.g., typing a question to the computer system and/or submitting a request through the input field). In some embodiments, the set of multiple, separate documents include documents located within a file system and/or a repository. In some embodiments, the set of multiple, separate documents include documents uploaded to the file system and/or repository by a user that corresponds to the first input and/or other users with access to the file system and/or the repository (e.g., a joint work file system and/or a project repository). In some embodiments, the set of multiple, separate documents include text documents, multimedia content, and/or other pieces of information saved to an accessible file type (e.g., one or more different video codex and/or one or more image formats). In some embodiments, the set of one or more items extracted from the set of multiple, separate documents include action items and/or tasks found within the set of multiple, separate documents and/or generated based on a set of inferences made based on the set of multiple, separate documents (e.g., one or more documents mention a common theme and the computer system provides an item to research the theme and/or one or more documents mention a deadline and the computer system provides an item corresponding to the deadline). In some embodiments, the set of one or more items includes a hierarchy of items and/or multilayered formatting of items (e.g., items can have subitems and/or items can be dependent on other items). In some embodiments, the computer system displays the set of one or more items within a widget within the user interface.

After (704) detecting the first input and in response to detecting, via the one or more input devices, a second input (e.g., a voice input and/or a tap input) corresponding to (e.g., requesting information from, associated with, requesting display of content from, and/or related to) the set of multiple, separate documents, wherein the second input is different (and/or separate) from the first input (and/or wherein the second input is detected later in time than the first input), in accordance with a determination that a separate input (e.g., an input within a separate application, an input not directed to the set of one or more items, an action detected by the computer system, and/or an activity detected by the computer system) (e.g., 6051 or any input as described above with respect to FIGS. 6K-6M) satisfies a set of one or more criteria (e.g., completion of an item of the one or more items, alteration of a document from the set of multiple, separate documents, and/or activity from a subject that corresponds to the first input and/or the second input), wherein the set of one or more criteria includes a criterion is satisfied when (and/or in accordance with a determination that) the separate input is detected after detecting the first input (and before the second input), the computer system displays (706), via the one or more display generation components, the user interface with a modification to (e.g., an addition of, a removal of, and/or an alternation of at least one item in) (e.g., as described above with respect to FIGS. 6K-6M and 6N-6O) the set of one or more items (and/or with a modification to an item of the set of one or more items), wherein the separate input is different from the first input. In some embodiments, the modification to the set of one or more items includes an addition of a new item to the set of one or more items, a removal of an item from the set of one or more items, and/or an alternation of content within an item of the one or more item (e.g., a change to a deadline and/or meeting time). In some embodiments, the modification to the set of one or more items includes a reorganization (e.g., a reorder and/or reprioritization) and/or restructure (e.g., creation and/or movement of items to be subitems and/or an alternation of one or more layers of items) of the one or more items. In some embodiments, the set of one or more criteria includes a criterion that is satisfied when the separate input completes and/or dismisses an item within the set of one or more items (e.g., closing a notification corresponding to an item and/or ending of a meeting), the separate input confirms completion of a task (e.g., a communication includes approved, confirmed, and/or other finalization phrases such as "looks good" and/or "great job"), and/or the separate input completes an activity (e.g., completing a task within another application, sending a communication, and/or saving a document).

After (704) detecting the first input and in response to detecting, via the one or more input devices, the second input corresponding to the set of multiple, separate documents, wherein the second input is different from the first input, in accordance with a determination that the separate input does not satisfy the set of one or more criteria, the computer system displays (708), via the one or more display generation components, the user interface without the modification to the set of one or more items.

In some embodiments, the set of one or more items are extracted from the set of multiple, separate documents via (and/or by and/or using) a large language model (LLM). In some embodiments, the LLM is locally stored and/or locally accessibly by the computer system. In some embodiments, the computer system inputs the first input and the set of multiple, separate documents into the LLM to receive the set of one or more items. In some embodiments, the LLM is remotely stored and/or provided by a service provider and/or third party. In some embodiments, the computer system sends to the service provide and/or third party the first input and the set of multiple, separate documents and receives the set of one or more items.

In some embodiments, before extracting the set of one or more items from the set of multiple, separate documents, the computer system summarizes, via the LLM, the set of multiple, separate documents, to generate a set of summaries, wherein the set of one or more items are extracted by the LLM from the set of summaries. In some embodiments, the computer system utilizes multiple LLMs and/or a series of extractions from an LLM (e.g., the computer system utilizes an LLM to summaries the set of multiple, separate documents and another LLM to extract the set of one or more items based on the summaries and the first input). In some embodiments, the computer system extracts the set of one or more items by inputting the first input and the set of summaries into a large language model (e.g., makes inferences and/or conclusions based on the summaries) to reduce load of processing the set of multiple, separate documents by preprocessing (e.g., the set of summaries provide a reduced input size and/or more condensed set of information for the computer system).

In some embodiments, displaying the user interface with the modification to the set of one or more items includes a first modification to (e.g., adding an new item to, removing an existing item from, and/or changing contents of an item of) the set of one or more items. In some embodiments, the first modification is determined by (and/or via and/or using) the LLM (and/or the computer system carries out the first modification based on a suggestion and/or response provided by the LLM based on the separate input). In some embodiments, the determination made by the large language model is based on the separate input (e.g., action made outside the user interface, completion of an item of the set of one or more items, and/or satisfaction of a criteria monitored by the LLM), current context of the computer system (e.g., information received, location, time, and/or communications made), and/or the set of multiple, separate documents (e.g., newly added documents, modified documents, and/or documents removed).

In some embodiments, after displaying the set of one or more items (e.g., with and/or without modification), the computer system detects, via the one or more input devices, a change to the set of multiple, separate documents (e.g., a new document is added to the set of multiple separate documents, a document is removed from the set of multiple, separate documents, and/or contents of a document of the set of multiple, separate documents is modified). In some embodiments, in response to detecting the change to the set of multiple, separate documents, the computer system displays, via the one or more display generation components, the user interface with a modification (and/or another modification) to (e.g., adding a new item to, removing an existing item from, and/or changing contents of an item of) the set of one or more items.

In some embodiments, the set of one or more criteria includes a criterion that is satisfied when the separate input satisfies (e.g., completes and/or satisfies a condition of) an item of the set of one or more items. In some embodiments, the item of the set of one or more items is satisfied when an action is taken that completes the item (e.g., submitting a filing, finishing a presentation, sending a communication, and/or scheduling a meeting). In some embodiments, the computer system infers (e.g., using an LLM and/or process) that the item is satisfied based on the separate input (e.g., the item does not have a rule and/or condition for satisfying and the computer system can infer that the item is satisfied based on context of the item).

In some embodiments, the set of one or more criteria includes a criterion that is satisfied when the separate input is a request to add an item to the set of one or more items. In some embodiments, the request to add the item to the set of one or more items is an input into a text entry field of the item to be added (e.g., entry of a title, contents, and/or due date for the item to be added). In some embodiments, the request to add the item to the set of one or more items is a query and/or question (e.g., a natural language and/or voice request) about the set of multiple, separate documents and/or about steps and/or actions needed to be completed (e.g., question on next steps for a project, question on when a meeting should be scheduled, and/or question answerable by content of the set of multiple, separate documents).

In some embodiments, the user interface corresponds to a first application (e.g., website, web application, system application, operating system application, first-party application, and/or third party application). In some embodiments, detecting the separate input includes detecting, via the one or more input devices, an input (e.g., a tap input, a voice input, an action, and/or a communication sent) in a second application (e.g., website, web application, system application, operating system application, first-party application, and/or third party application) different (and/or separate) from the first application. In some embodiments, the first application and the second application are separate applications running, active, and/or accessible on the computer system. In some embodiments, the first application and the second application are separate websites and/or separate web applications accessible through a browser on the computer system.

In some embodiments, the separate input is not detected with respect to (e.g., is not directed to, is detected outside of, and/or does not reference) the set of multiple, separate documents. In some embodiments, the separate input is detected outside of the user interface (e.g., in another application and/or not related to the user interface) and/or is an activity that does not involve the set of multiple, separate documents (e.g., scheduling a meeting, sending a communication, and/or completing a task that does not involve a document within the set of multiple, separate documents).

In some embodiments, the first input is a request to view the user interface (e.g., a request to open the user interface, an application corresponding to the user interface, and/or a webpage that hosts the user interface). In some embodiments, the second input is another (e.g., later in time, separate, and/or alternative) request to view the user interface (e.g., a relaunch of an application corresponding to the user interface, a refresh of a webpage that hosts the user interface, and/or navigation to the user interface). In some embodiments, the first input and the second input are a common type of input (e.g., a voice input, a selection input, and/or a tap input) detected at different times (e.g., the second input is detected after the first input).

In some embodiments, the user interface is a widget (e.g., a user interface and/or user interface element that includes content and/or a set of controls corresponding to the content associated with an application and/or other user interface that includes additional content).

In some embodiments, the modification to the set of one or more items includes an addition of a new item (e.g., an item that is not previously included in the set of one or more items) to the set of one or more items. In some embodiments, the new item is based on the first input and/or the separate input. In some embodiments, the new item is based on the set of one or more items and/or the set of multiple, separate documents. In some embodiments, the new item is based on context corresponding to the separate input (e.g., contents of a communication and/or contents of a document corresponding to the separate input).

In some embodiments, the modification to the set of one or more items includes a change to an existing item (e.g., altering content of the item such as changing a description, due date, and/or people involved with the existing item) of the set of one or more items. In some embodiments, changing the existing item includes altering one or more visual characteristics of the existing item (e.g., striking out the existing item, greying out the existing item, increasing emphasis of the existing item, and/or altering the size of the existing item).

In some embodiments, the set of one or more items includes a first item (e.g., a first high-level summary, a first description, a first bullet, and/or a first entry) (e.g., 696, 608, and/or 620) and a second item (e.g., a second high-level summary, a second description, a second bullet, and/or a second entry) (e.g., 696, 608, and/or 620) different from the first item. In some embodiments, the first item includes a first control (e.g., a first hyperlink, a first key term, and/or a first navigational control) (e.g., 696a, 608a, and/or 620a) corresponding to (e.g., for accessing, within a context of, and/or extracted from) a first set of one or more summaries (e.g., further summaries of the first item, support for the first item, and/or additional context corresponding to the first item) (e.g., 644, 656, and/or 668) of the set of multiple, separate documents. In some embodiments, the second item includes a second control (e.g., a second hyperlink, a second key term, and/or a second navigational control) (e.g., 696a, 608a, and/or 620a) corresponding to (e.g., for accessing, within a context of, and/or extracted from) a second set of one or more summaries (e.g., further summaries of the second item, support for the second item, and/or additional context corresponding to the second item) (e.g., 644, 656, and/or 668) of the set of multiple, separate documents. In some embodiments, the second set of one or more summaries is different from the first set of one or more summaries. In some embodiments, in response to detecting an input corresponding to the first control, the computer system displays the first set of one or more summaries. In some embodiments, in response to detecting an input corresponding to the second control, the computer system displays the second set of one or more summaries. In some embodiments, the first control is a hyperlink of a key term within the first item extracted from the first set of one or more summaries and/or the set of multiple, separate documents. In some embodiments, the second control is a hyperlink of a key term within the second item extracted from the second set of one or more summaries and/or the set of multiple, separate documents.

In some embodiments, the first set of one or more summaries includes a first summary (e.g., further summary of the first item, support for the first item, and/or additional context corresponding to the first item) (e.g., 644, 656, and/or 668) and a second summary (e.g., further summary of the second item, support for the second item, and/or additional context corresponding to the second item) (e.g., 644, 656, and/or 668) different from the first summary. In some embodiments, the first summary a third control (e.g., a third hyperlink, a third key term, and/or a third navigational control) (e.g., 644a, 644b, 656a, and/or 668a) corresponding to (e.g., for accessing, within a context of, and/or extracted from) a first set of one or more documents (e.g., documents relevant to the first item, documents supporting the first summary, and/or documents and/or content of the documents that the first summary is based on) of the set of multiple, separate documents. In some embodiments, the second summary includes a fourth control (e.g., a fourth hyperlink, a fourth key term, and/or a fourth navigational control) (e.g., 644a, 644b, 656a, and/or 668a) corresponding to (e.g., for accessing, within a context of, and/or extracted from) a second set of one or more documents (e.g., documents relevant to the second item, documents supporting the second summary, and/or documents and/or content of the documents that the second summary is based on) of the set of multiple, separate documents. In some embodiments, the first set of one or more documents is different from the second set of one or more documents. In some embodiments, in response to detecting an input corresponding to the third control, the computer system displays at least one document (and/or at least a portion (e.g., 610a, 610b, 610c, 610d, and/or 610e) of the one document) of the first set of one or more documents. In some embodiments, in response to detecting an input corresponding to the fourth control, the computer system displays at least one document (and/or at least a portion (e.g., 610a, 610b, 610c, 610d, and/or 610e) of the one document) of the second set of one or more documents. In some embodiments, the first set of one or more documents corresponds to documents of the set of multiple, separate documents that are relevant to the first summary. In some embodiments, the second set of one or more documents corresponds to documents of the set of multiple, separate documents that are relevant to the second summary. In some embodiments, the third control is a hyperlink of a key term within the first item extracted from the first set of one or more documents and/or the set of multiple, separate documents. In some embodiments, the fourth control is a hyperlink of a key term within the second item extracted from the second set of documents and/or the set of multiple, separate documents.

In some embodiments, the computer system detects, via the one or more input devices, an input (e.g., a tap input and/or a voice input) (e.g., 605i and/or 605j) corresponding to (e.g., submitting, entering, including, and/or asking) a question (e.g., a natural language question and/or a plain language question within a chat box and/or input mechanism). In some embodiments, the input corresponding to the question is the first input or the second input. In some embodiments, the input corresponding to the question is separate from the first input and the second input. In some embodiments, in response to detecting the input corresponding to the question, the computer system displays, via the one or more display generation components, a user interface (e.g., an application window, a web interface, and/or a widget) (e.g., 612, 640, and/or 652) that includes content (e.g., content within 640 and/or 652) extracted from the set of multiple, separate documents, wherein the content answers the question. In some embodiments, the user interface that includes the content is the user interface that includes the set of one or more items. In some embodiments, the content is displayed alongside and/or at a common time as the set of one or more items (e.g., due to a common input and/or due to a series of inputs). In some embodiments, after displaying the user interface that includes the content extracted from the set of multiple, separate documents and in response to detecting a change to the set of multiple, separate documents (e.g., a new document is added to the set of multiple separate documents, a document is removed from the set of multiple, separate documents, and/or contents of a document of the set of multiple, separate documents is modified), the computer system modifies (e.g., adds to, removes from, and/or changes inclusions within) (e.g., as described above with respect to FIGS. 6J-6O) the content based on the change to the set of multiple, separate documents.

In some embodiments, while displaying a user interface (e.g., an application window, a web interface, and/or a widget) (e.g., 612 and/or 692) including one or more categories (e.g., one or more predefined, default, and/or relevant categories) (e.g., 692a, 692b, and/or 692c) for filtering the set of multiple, separate documents, the computer system detects, via the one or more input devices, an input (e.g., a tap input and/or a voice input) (e.g., 605g) corresponding to (e.g., submitting, entering and/or including) a request to add a user-defined category (e.g., a new category, a non-standard category, and/or a category without predefined scope and/or rules). In some embodiments, in response to detecting the request to add the user-defined category, the computer system filters (e.g., as described above with respect to FIG. 6H) the set of multiple, separate documents by the user-defined category. In some embodiments, filtering the set of multiple, separate documents by the user-defined category includes displaying a subset of documents from the multiple, separate documents without displaying another subset of documents from the multiple, separate documents due to the other subject of documents not being relevant to the user-defined category. In some embodiments, in response to detecting the request to add the user-defined category, the computer system displays, via the one or more display generation components, the user-defined category alongside the one or more categories.

In some embodiments, after filtering the set of multiple, separate documents by the user-defined category, the computer system detects a change to the set of multiple, separate documents (e.g., a new document is added to the set of multiple separate documents, a document is removed from the set of multiple, separate documents, and/or contents of a document of the set of multiple, separate documents is modified) (e.g., as described above with respect to FIG. 6H). In some embodiments, in response to detecting the change to the set of multiple, separate documents, the computer system displays, the user interface with a modification to (e.g., an addition of, a removal of, and/or an alternation of at least one item in) the user interface (e.g., as described above with respect to FIG. 6H). In some embodiments, the modification to the user interface includes a reorganization (e.g., a reorder and/or reprioritization) and/or restructure (e.g., creation and/or movement of items to be subitems and/or an alternation of one or more layers of items) of the multiple, separate documents based on the user-defined category (e.g., moving one or more items into different buckets and/or outline entries to provide a view of the multiple, separate documents that is based on the user-defined category).

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

In some embodiments, content is automatically generated by one or more computer systems in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content that is generated via one or more artificial intelligence (AI) processes is referred to as generative content (e.g., generative images, generative graphics, generative video, generative audio, and/or generative text). Generative content is typically generated by an AI process based on a prompt that is provided to the AI process. An AI process typically uses one or more AI models to generate an output based on an input. An AI process optionally includes one or more pre-processing steps to adjust the input before it is used by the AI model to generate an output (e.g., adjustment to a user-provided prompt, creation of a system-generated prompt, and/or AI model selection). An AI process optionally includes one or more post-processing steps to adjust the output by the AI model (e.g., passing AI model output to a different AI model, upscaling, downscaling, cropping, formatting, and/or adding or removing metadata) before the output of the AI model used for other purposes such as being provided to a different software process for further processing or being presented (e.g., visually or audibly) to a user. An AI process that generates generative content is sometimes referred to as a generative AI process.

A prompt for generating generative content can include one or more of: one or more words (e.g., a natural language prompt that is written or spoken), one or more images, one or more drawings, and/or one or more videos. AI processes can include machine learning models including neural networks. Neural networks can include transformer-based deep neural networks such as large language models (LLMs). Generative pre-trained transformer models are a type of LLM that can be effective at generating novel generative content based on a prompt. Some AI processes use a prompt that includes text to generate either different generative text, generative audio content, and/or generative visual content. Some AI processes use a prompt that includes visual content and/or an audio content to generate generative text (e.g., a transcription of audio and/or a description of the visual content). Some multi-modal AI processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an AI process that include phrasing, a specified style, relevant context (e.g., starting point content and/or one or more examples), and/or a role for the AI process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly, a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseud-random seed content is used as a starting point for creating the generative content). For example, when generating an image from a diffusion model, a random noise pattern is iteratively denoised based on the prompt to generate an image that is based on the prompt. While specific types of AI processes have been described herein, it should be understood that a variety of different AI processes could be used to generate generative content based on a prompt.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other embodiments, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some embodiments, data from multiple devices can be combined in a privacy-preserving manner to train an ML model.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

In some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

In some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

As described above, one aspect of the present technology is the gathering and use of data available from various sources to improve access to content. The present disclosure contemplates that in some instances, this gathered data may include personal information data that uniquely identifies or can be used to contact or locate a specific person. Such personal information data can include demographic data, location-based data, telephone numbers, email addresses, social media identifiers, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used for accessing content. Accordingly, use of such personal information data enables users to have a computer system perform operations for accessing content. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of some services, the present technology can be configured to allow users to select to "opt in" or "opt out" of participation in the collection of personal information data during registration for services or anytime thereafter. In another example, users can select not to provide certain data for some services. In yet another example, users can select to limit the length of time data is maintained or entirely prohibit the development of user profile. In addition to providing "opt in" and "opt out" options, the present disclosure contemplates providing notifications relating to the access or use of personal information. For instance, a user may be notified upon downloading an application that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other processes.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the some services, or publicly available information.

The following clauses are to further aid in the understanding of the present disclosure:
1. A method, comprising:
   at a computer system that is in communication with one or more input devices and one or more display generation components:
   in response to detecting, via the one or more input devices, a first input corresponding to a set of multiple, separate documents, displaying, via the one or more display generation components, a user interface including a set of one or more items, extracted from the set of multiple, separate documents; and
   after detecting the first input and in response to detecting, via the one or more input devices, a second input corresponding to the set of multiple, separate documents, wherein the second input is different from the first input:
      in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and
      in accordance with a determination that the separate input does not satisfy the set of one or more criteria, displaying, via the one or more display generation components, the user interface without the modification to the set of one or more items.

2. The method of clause 1, wherein the set of one or more items are extracted from the set of multiple, separate documents via a large language model, LLM.
3. The method of clause 2, further comprising:
   before extracting the set of one or more items from the set of multiple, separate documents, summarizing, via the LLM, the set of multiple, separate documents, to generate a set of summaries, wherein the set of one or more items are extracted by the LLM from the set of summaries.
4. The method of clause 2, wherein displaying the user interface with the modification to the set of one or more items includes a first modification to the set of one or more items, and wherein the first modification is determined by the LLM.
5. The method of clause 1, further comprising:
   after displaying the set of one or more items, detecting, via the one or more input devices, a change to the set of multiple, separate documents; and
   in response to detecting the change to the set of multiple, separate documents, displaying, via the one or more display generation components, the user interface with a modification to the set of one or more items.
6. The method of clause 1, wherein the set of one or more criteria includes a criterion that is satisfied when the separate input satisfies an item of the set of one or more items.
7. The method of clause 1, wherein the set of one or more criteria includes a criterion that is satisfied when the separate input is a request to add an item to the set of one or more items.
8. The method of clause 1, wherein the user interface corresponds to a first application, and wherein detecting the separate input includes detecting, via the one or more input devices, an input in a second application different from the first application.
9. The method of clause 1, wherein the separate input is not detected with respect to the set of multiple, separate documents.
10. The method of clause 1, wherein the first input is a request to view the user interface, and wherein the second input is another request to view the user interface.
11. The method of clause 1, wherein the user interface is a widget.
12. The method of clause 1, wherein the modification to the set of one or more items includes an addition of a new item to the set of one or more items.
13. The method of clause 1, wherein the modification to the set of one or more items includes a change to an existing item of the set of one or more items.
14. The method of clause 1, wherein the set of one or more items includes a first item and a second item different from the first item, wherein the first item includes a first control corresponding to a first set of one or more summaries of the set of multiple, separate documents, wherein the second item includes a second control corresponding to a second set of one or more summaries of the set of multiple, separate documents, and wherein the second set of one or more summaries is different from the first set of one or more summaries.
15. The method of clause 14, wherein the first set of one or more summaries includes a first summary and a second summary different from the first summary, wherein the first summary a third control corresponding to a first set of one or more documents of the set of multiple, separate documents, wherein the second summary includes a fourth control corresponding to a second set of one or more documents of the set of multiple, separate documents, and wherein the first set of one or more documents is different from the second set of one or more documents.
16. The method of clause 1, further comprising:
   detecting, via the one or more input devices, an input corresponding to a question;
   in response to detecting the input corresponding to the question, displaying, via the one or more display generation components, a user interface that includes content extracted from the set of multiple, separate documents, wherein the content answers the question; and
   after displaying the user interface that includes the content extracted from the set of multiple, separate documents and in response to detecting a change to the set of multiple, separate documents, modifying the content based on the change to the set of multiple, separate documents.
17. The method of clause 1, further comprising:
   while displaying a user interface including one or more categories for filtering the set of multiple, separate documents, detecting, via the one or more input devices, an input corresponding to a request to add a user-defined category; and
   in response to detecting the request to add the user-defined category, filtering the set of multiple, separate documents by the user-defined category.
18. The method of clause 17, further comprising:
   after filtering the set of multiple, separate documents by the user-defined category, detecting a change to the set of multiple, separate documents; and
   in response to detecting the change to the set of multiple, separate documents, displaying, the user interface with a modification to the user interface.
19. A non-transitory computer-readable storage medium storing one or more programs configured to be executed by one or more processors of a computer system that is in communication with one or more input devices and one or more display generation components, the one or more programs including instructions for:
   in response to detecting, via the one or more input devices, a first input corresponding to a set of multiple, separate documents, displaying, via the one or more display generation components, a user interface including a set of one or more items, extracted from the set of multiple, separate documents; and
   after detecting the first input and in response to detecting, via the one or more input devices, a second input corresponding to the set of multiple, separate documents, wherein the second input is different from the first input:
      in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and
      in accordance with a determination that the separate input does not satisfy the set of one or more criteria, displaying, via the one or more display generation components, the user interface without the modification to the set of one or more items.
20. A computer system configured to communicate with one or more input devices and one or more display generation components, the computer system comprising:
   one or more processors; and
   memory storing one or more programs configured to be executed by the one or more processors, the one or more programs including instructions for:
      in response to detecting, via the one or more input devices, a first input corresponding to a set of multiple, separate documents, displaying, via the one or more display generation components, a user interface including a set of one or more items, extracted from the set of multiple, separate documents; and
      after detecting the first input and in response to detecting, via the one or more input devices, a second input corresponding to the set of multiple, separate documents, wherein the second input is different from the first input:
         in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and
         in accordance with a determination that the separate input does not satisfy the set of one or more criteria, displaying, via the one or more display generation components, the user interface without the modification to the set of one or more items.

## Claims

1. A method, comprising:
at a computer system that is in communication with one or more input devices and one or more display generation components:
in response to detecting, via the one or more input devices, a first input corresponding to a set of multiple, separate documents, displaying, via the one or more display generation components, a user interface including a set of one or more items, extracted from the set of multiple, separate documents; and
after detecting the first input and in response to detecting, via the one or more input devices, a second input corresponding to the set of multiple, separate documents, wherein the second input is different from the first input:
in accordance with a determination that a separate input satisfies a set of one or more criteria, wherein the set of one or more criteria includes a criterion is satisfied when the separate input is detected after detecting the first input, displaying, via the one or more display generation components, the user interface with a modification to the set of one or more items, wherein the separate input is different from the first input; and
in accordance with a determination that the separate input does not satisfy the set of one or more criteria, displaying, via the one or more display generation components, the user interface without the modification to the set of one or more items.

2. The method of claim 1, wherein the set of one or more items are extracted from the set of multiple, separate documents via a large language model, LLM.

3. The method of claim 2, further comprising:
before extracting the set of one or more items from the set of multiple, separate documents, summarizing, via the LLM, the set of multiple, separate documents, to generate a set of summaries, wherein the set of one or more items are extracted by the LLM from the set of summaries.

4. The method of any one of claims 2-3, wherein displaying the user interface with the modification to the set of one or more items includes a first modification to the set of one or more items, and wherein the first modification is determined by the LLM.

5. The method of any one of claims 1-4, further comprising:
after displaying the set of one or more items, detecting, via the one or more input devices, a change to the set of multiple, separate documents; and
in response to detecting the change to the set of multiple, separate documents, displaying, via the one or more display generation components, the user interface with a modification to the set of one or more items.

6. The method of any one of claims 1-5, wherein the set of one or more criteria includes a criterion that is satisfied when the separate input satisfies an item of the set of one or more items.

7. The method of any one of claims 1-6, wherein the set of one or more criteria includes a criterion that is satisfied when the separate input is a request to add an item to the set of one or more items.

8. The method of any one of claims 1-7, wherein the user interface corresponds to a first application, and wherein detecting the separate input includes detecting, via the one or more input devices, an input in a second application different from the first application.

9. The method of any one of claims 1-8, wherein the modification to the set of one or more items includes an addition of a new item to the set of one or more items.

10. The method of any one of claims 1-9, wherein the modification to the set of one or more items includes a change to an existing item of the set of one or more items.

11. The method of any one of claims 1-10, further comprising:
detecting, via the one or more input devices, an input corresponding to a question;
in response to detecting the input corresponding to the question, displaying, via the one or more display generation components, a user interface that includes content extracted from the set of multiple, separate documents, wherein the content answers the question; and
after displaying the user interface that includes the content extracted from the set of multiple, separate documents and in response to detecting a change to the set of multiple, separate documents, modifying the content based on the change to the set of multiple, separate documents.

12. The method of any one of claims 1-11, further comprising:
while displaying a user interface including one or more categories for filtering the set of multiple, separate documents, detecting, via the one or more input devices, an input corresponding to a request to add a user-defined category; and
in response to detecting the request to add the user-defined category, filtering the set of multiple, separate documents by the user-defined category.

13. The method of claim 12, further comprising:
after filtering the set of multiple, separate documents by the user-defined category, detecting a change to the set of multiple, separate documents; and
in response to detecting the change to the set of multiple, separate documents, displaying, the user interface with a modification to the user interface.

14. A non-transitory computer-readable medium storing one or more programs configured to be executed by one or more processors of a computer system that is in communication with one or more input devices and one or more display generation components, the one or more programs including instructions for performing the method of any one of claims 1-13.

15. A computer system that is configured to communicate with one or more input devices and one or more display generation components, the computer system comprising:
one or more processors; and
memory storing one or more programs configured to be executed by the one or more processors, the one or more programs including instructions for performing the method of any one of claims 1-13.
